# FASCICULE DE BREVET EUROPEEN

(11) **EP 4 248 637 B1**
(45) Date de publication et mention de la délivrance du brevet: **16.09.2026**
(21) Numéro de dépôt: 21815234.6
(22) Date de dépôt: 03.11.2021
(51) Int. Cl.: H04M 1/57, H04M 3/42, H04M 3/51, H04M 7/00

(54) **OPTIMISATION DU DECLENCHEMENT DE COMMUNICATIONS TELEPHONIQUES**
OPTIMIERTE AUSLÖSUNG VON TELEFONKOMMUNIKATIONEN
OPTIMISED TRIGGERING OF TELEPHONE COMMUNICATIONS

(30) Priorité: 19.11.2020 FR 2011917
(43) Date de publication de la demande: 27.09.2023
(73) Titulaire: Orange, 92130 Issy-les-Moulineaux (FR)
(72) Inventeur: CASEAU, François, 92326 CHÂTILLON CEDEX (FR); EVANS, Mark, 92326 CHÂTILLON CEDEX (FR)
(74) Mandataire: Plasseraud IP
(86) Numéro de dépôt international: PCT/FR2021/051931
(87) Numéro de publication internationale: WO 2022/106767

(56) Documents cités:
- EP-A2- 1 134 960
- US-A1- 2012 039 452
- US-A1- 2015 195 403
- US-A1- 2018 131 799
- US-B1- 10 277 745
- US-B1- 10 523 814
- US-B1- 10 805 458
- US-B1- 9 060 057
- US-B1- 9 350 858

## Description

### Domaine technique

La présente divulgation relève du domaine des télécommunications.

Plus particulièrement, la présente divulgation porte sur des procédés de gestion de communications téléphoniques et sur des dispositifs, plateformes de gestion d'identifiants, programmes informatiques et supports d'enregistrement correspondants.

### Technique antérieure

Parmi les fonctionnalités offertes pour la gestion de la relation client, le « click-to-call » demeure très apprécié. Cette fonctionnalité permet à un utilisateur de déclencher un appel vers un client depuis un poste de travail. Pour cela, l'utilisateur clique simplement sur le numéro téléphonique de la cible sous forme de lien. En réponse à ce clic, un signal de commande est généré à destination d'un composeur.

Si le composeur est relié au terminal de l'utilisateur, le terminal compose alors, automatiquement, le numéro téléphonique du client. Grâce au « click-to-call », il n'est donc plus nécessaire de composer manuellement des numéros téléphoniques, ce qui représente à la fois un gain de temps et une suppression du risque d'erreur qui y est lié.

Dans le monde professionnel, il peut arriver qu'un professionnel doive appeler un client et que le numéro présenté au client soit un numéro professionnel d'entreprise différent de son numéro primaire. Une des solutions permettant de déclencher un tel appel à l'aide de la fonctionnalité « click-to-call » est que le composeur recevant le signal de commande soit relié à une plateforme téléphonique. La plateforme appelle alors à la fois le professionnel et le client, puis lie les deux appels.

Toutefois, il peut arriver que ce soit la messagerie vocale du professionnel qui décroche et dans ce cas, le client final risque d'être mis en relation avec cette messagerie.

Pour éviter ce désagrément, il existe donc un besoin de permettre à un professionnel d'appeler un client en présentant au client un numéro professionnel d'entreprise différent de son numéro primaire, tout en garantissant que le client soit effectivement mis en relation avec le professionnel et non avec une messagerie.

Il est par ailleurs souhaitable que cet objectif soit atteint sans requérir de manipulation fastidieuse de la part du professionnel.

Il est déjà connu de l'art antérieur le document US 2012/0039452 A1 qui décrit un contrôle d'établissement de communication destiné à prévenir les appels non sollicités (SPIT/UC) en combinant des services complémentaires réseau - liste noire (SCR), liste blanche (SCA), rejet des appels anonymes (ACR), Do-Not-Disturb et renvois d'appel - avec une authentification côté appelant (saisie d'un PIN) et un test de type Turing (audio CAPTCHA via « consent mailbox ») permettant soit d'autoriser l'appel, soit de le bloquer ou d'inviter au dépôt d'un message. Le document propose en outre un système de gestion avec interface graphique pour que l'abonné compose et priorise son « profil anti-UC », et souligne que la solution est applicable en PSTN/ISDN comme en VoIP/IMS sans extensions protocolaires lourdes, le tout illustré par plusieurs scénarios de signalisation et blocs fonctionnels.

### Résumé

La présente divulgation vient améliorer la situation. L'invention est décrite dans l'ensemble de revendications ci-joint.

Il est proposé un procédé de gestion d'une communication téléphonique entre un premier terminal et un deuxième terminal dans un réseau de communication, chaque terminal étant associé respectivement à au moins un identifiant dans ledit réseau, ledit procédé étant mis en œuvre par au moins un dispositif de gestion configuré pour mettre en œuvre le procédé de gestion de communication téléphonique, ledit procédé comprenant :
- une réception d'une requête d'établissement d'une session de communication téléphonique, la requête comprenant un identifiant d'appelé correspondant à un identifiant du deuxième terminal ;
- une émission d'une commande de premier appel vers le premier terminal; et
- sur détection d'un décroché du premier terminal par un utilisateur, ladite détection étant basée au moins sur une obtention d'un signal indiquant que la commande de premier appel a été acceptée, associée à une obtention d'une indication d'une interaction d'un utilisateur avec une interface homme-machine au niveau du premier terminal, une émission d'une commande de deuxième appel vers le deuxième terminal.

Ainsi, un utilisateur tel qu'un professionnel peut déclencher des appels téléphoniques entre un premier terminal à son usage et un deuxième terminal de son choix d'une manière simple et rapide tout en évitant le risque d'une erreur lors de la saisie du numéro à appeler.

Le client peut être appelé non pas directement depuis le terminal du professionnel mais depuis un dispositif distinct. Le numéro présenté au client est donc celui associé à ce dispositif distinct, donc par exemple un numéro professionnel d'entreprise.

Par ailleurs, le dispositif appelle en premier le premier terminal ou terminal du professionnel. Le deuxième terminal ou terminal du client n'est ensuite appelé que lorsqu'un utilisateur, c'est-à-dire un humain et non par exemple une messagerie, a décroché, donc accepté la communication, au niveau du premier terminal ou terminal du professionnel. Plus particulièrement, le dispositif de gestion ne détecte un décroché du premier terminal par l'utilisateur qu'à la double condition d'obtenir à la fois un signal indiquant qu'un décroché du premier terminal a été effectué et une indication d'une interaction de l'utilisateur avec une interface homme-machine au niveau du premier terminal. Une conséquence est que le client peut être mis en relation avec le professionnel de manière certaine.

A l'inverse, le deuxième terminal ou terminal du client n'est pas appelé si la communication n'est pas préalablement acceptée au niveau du premier terminal, ou si la communication est préalablement acceptée sans qu'il n'y ait eu d'interaction avec l'interface homme-machine au niveau du premier terminal.

Il est en outre possible de prévoir des actions différentes en aval selon que le premier terminal a été décroché par une messagerie vocale, ou n'a pas été décroché. Les actions envisageables peuvent inclure, par exemple, de prévoir un rappel automatique à destination du premier terminal à l'issue d'un délai donné, d'enregistrer dans un journal d'incidents une indication d'une incapacité à joindre l'utilisateur du premier terminal ainsi que la cause identifiée de cette incapacité, d'émettre une alerte à destination de l'utilisateur du premier terminal, etc.

L'interaction avec une interface homme-machine s'effectue par exemple sur la base d'une interaction tactile ou vocale, qui est caractéristique d'un décroché effectué par un utilisateur et non par une messagerie.

Ainsi, en sus de l'action de décrocher elle-même, aucune manipulation supplémentaire, potentiellement fastidieuse, n'est requise de la part du professionnel.

Il est également proposé un programme informatique comportant des instructions pour la mise en œuvre du procédé ci-avant lorsque ce programme est exécuté par un processeur.

Il est également proposé un support d'enregistrement non transitoire lisible par un ordinateur sur lequel est enregistré le programme ci-avant.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de gestion précité.

Il est également proposé un dispositif de gestion d'une communication téléphonique configuré pour la mise en œuvre du procédé ci-avant.

I est également proposé une plateforme de gestion d'identifiants comprenant le dispositif ci-avant.

Le procédé ci-avant peut comprendre optionnellement certaines fonctions supplémentaires telles que définies ci-après.

Par exemple, l'interaction de l'utilisateur avec l'interface homme-machine au niveau du premier terminal peut être du type d'une interaction d'acceptation d'appel et l'indication de l'interaction d'acceptation d'appel peut être un appel API issu d'un composeur téléphonique du premier terminal.

Un appel API désigne un signal généré via une interface de programmation applicative. Par exemple, décrocher le premier terminal à l'aide d'une interaction avec l'interface homme-machine du premier terminal peut générer automatiquement l'émission, par une interface de programmation applicative d'un composeur téléphonique virtuel, d'un signal indicatif de cette interaction.

Ainsi, le composeur téléphonique virtuel représente un exemple d'interface applicative locale au premier terminal et configurée pour signaler à la plateforme de gestion de communication une indication de décroché effectué par un humain.

Un appel API peut aussi être employé pour signaler d'autres types d'événements, tel qu'un refus d'appel entrant, à la plateforme de gestion de communication.

Par exemple, l'indication de l'interaction peut être reçue via un canal de communication de données.

Un canal de communication de données désigne tout type de canal de communication, filaire ou non, par lequel peuvent transiter des données informatiques interprétables par la plateforme de gestion de communication.

Ainsi, il est possible pour le premier terminal d'émettre des messages de signalisation destinés à la plateforme de gestion de communication à l'aide d'un canal de données indépendant du canal vocal destiné à être utilisé pour la session de communication.

Le recours à un canal dédié à la signalisation depuis le premier terminal vers la plateforme de gestion de communication permet d'optimiser les ressources réseau utilisées à cet effet.

Par exemple, le signal indiquant que la commande de premier appel a été acceptée peut être vocal et reçu via un canal de communication vocale.

Ainsi, il est possible d'utiliser le canal vocal existant pour transmettre, par exemple via l'emploi d'un code en fréquences vocales, un signal pouvant être reconnu par la plateforme de gestion de communication comme correspondant à une acceptation de l'appel. Ceci peut venir confirmer l'indication de l'interaction avec l'interface homme-machine et le signal indiquant que la commande de premier appel a été acceptée obtenus par ailleurs par la plateforme de gestion de communication.

Par exemple, la requête d'établissement d'une session de communication téléphonique peut comprendre un identifiant d'appelant correspondant à un identifiant du premier terminal et la commande de premier appel peut comprendre un identifiant d'appelé correspondant audit identifiant du premier terminal.

Ainsi, la plateforme peut commander un premier appel vers le premier terminal d'un professionnel quel que soit l'identifiant de ce premier terminal, sur simple obtention d'une requête indiquant cet identifiant. De manière particulièrement simple, ceci permet au professionnel de choisir, parmi une pluralité d'identifiants potentiels d'un ou de plusieurs terminaux à sa disposition, celui qu'il souhaite voir appelé.

Par exemple, la requête d'établissement d'une session de communication téléphonique peut être issue d'une interaction avec une interface homme-machine d'un appareil connecté à un portail applicatif.

Par exemple, le procédé peut comprendre, en outre, après l'émission de la commande de deuxième appel vers le deuxième terminal, une émission d'une commande d'établissement d'une session de communication entre le premier terminal et le deuxième terminal sur détection d'un décroché du deuxième terminal.

Ainsi, la plateforme de gestion de communication ne joint les deux branches de communication vers, respectivement le premier terminal et le deuxième terminal que lorsqu'un décroché s'est également produit au niveau du deuxième terminal.

Par exemple, le procédé peut comprendre, en outre, une émission d'une commande de fin de premier appel vers le premier terminal à expiration du délai prédéterminé en l'absence de détection d'un décrocher du premier terminal et en l'absence de détection d'un rejet du premier appel en provenance du premier terminal.

Il peut également être prévu qu'en l'absence de décroché au niveau du deuxième terminal à l'issue d'un délai prédéterminé, la plateforme mette en œuvre automatiquement une action prédéfinie, telle qu'une commande de signal de fin d'appel à destination du premier terminal et/ou du deuxième terminal.

Par exemple, le procédé peut comprendre, en outre, une émission d'une commande de fin de premier appel vers le premier terminal sur détection, avant l'expiration du délai prédéterminé, d'un rejet du deuxième appel en provenance du premier terminal.

Les exemples ci-dessus de raccrochage automatique initié par la plateforme de gestion de communication représentent un gain de confort pour l'utilisateur du premier terminal par rapport au fait d'effectuer un raccrochage manuel par interaction avec une interface homme-machine.

### Brève description des dessins

D'autres caractéristiques, détails et avantages apparaîtront à la lecture de la description détaillée ci-après, et à l'analyse des dessins annexés, sur lesquels :
Fig. 1 illustre un système de communication téléphonique dans un exemple de réalisation.
Fig. 2 illustre un algorithme général d'un programme informatique pour la mise en œuvre, lorsque ce programme est exécuté par un processeur, d'un procédé de gestion d'une communication téléphonique dans un exemple de réalisation.
Fig. 3 illustre un dispositif de gestion d'une communication téléphonique dans un exemple de réalisation.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Le principe général de l'invention repose sur l'ouverture de deux canaux de communication téléphonique entre, d'une part, une plateforme de gestion de communication, en tant que terminal appelant, et, d'autre part, un premier et un deuxième terminal de communication, respectivement, en tant que terminaux appelés. L'ouverture du canal de communication téléphonique vers le deuxième terminal de communication n'est déclenchée que si la plateforme de gestion de communication détecte un décroché effectué, au niveau du premier terminal, par un humain. Cette détection repose sur la réception par la plateforme de gestion de communication d'un signal issu d'une interaction avec une interface homme-machine au niveau du premier terminal.

L'invention trouve de nombreuses applications en particulier dans un contexte professionnel. Par exemple, il peut être souhaitable d'établir une communication téléphonique entre un professionnel et un interlocuteur en présentant à l'interlocuteur un numéro professionnel d'entreprise différent du numéro primaire du professionnel, et ce tout en garantissant que l'interlocuteur soit effectivement mis en relation avec le professionnel et non avec une messagerie.

Dans la suite de la description, on s'attache à décrire en détails un exemple de mise en œuvre de l'invention.

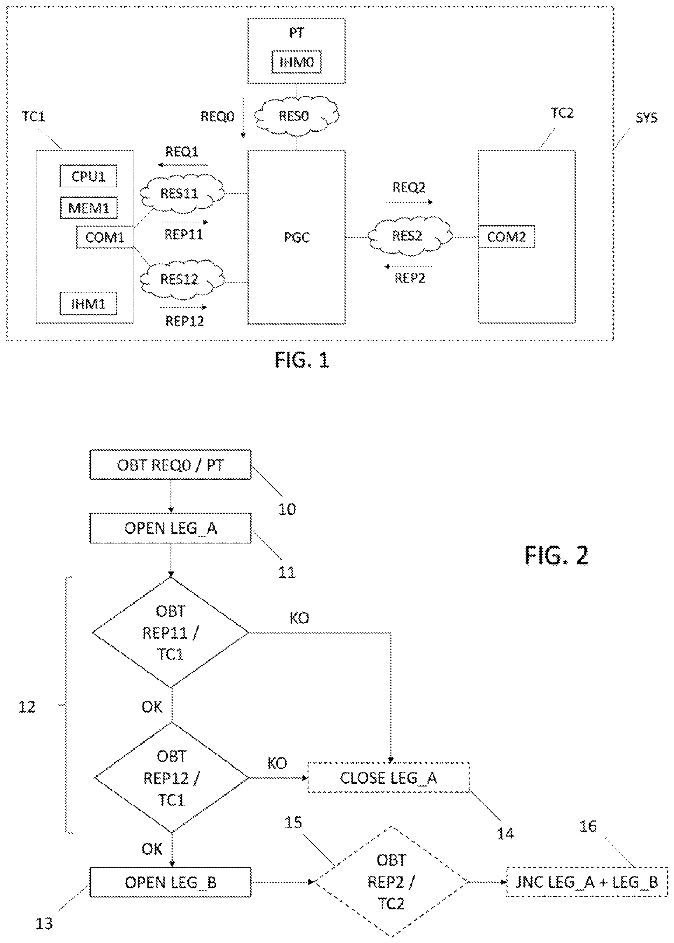

On se réfère à présent à la figure 1, qui illustre un exemple de système de télécommunication (SYS). Le système (SYS) comprend un premier terminal de communication (TC1) ; un dispositif de gestion ou plateforme de gestion de communication (PGC), un deuxième terminal de communication (TC2) et un poste de travail (PT).

Dans l'exemple présenté ici, le premier terminal de communication (TC1), ci-après premier terminal, est un téléphone mobile. Le premier terminal est par exemple un téléphone intelligent (plus connu sous le terme anglophone « smartphone ») fonctionnant sous le système d'exploitation IOS, Android ou Linux. Typiquement, le premier terminal (TC1) comprend une carte SIM (acronyme anglophone pour « Subscriber Identity Module ») dotée d'un identifiant d'abonné unique IMSI (acronyme anglophone pour « International Mobile Subscriber Identity »). Cet identifiant d'abonné unique IMSI permet d'identifier le premier terminal (TC1) dans le réseau auprès duquel l'utilisateur du premier terminal (TC1) s'est abonné. Dans l'exemple illustré en Figure 1, ce réseau, aussi appelé réseau de rattachement, correspond à un premier réseau. Le premier réseau est par exemple un réseau de type mobile tel qu'un réseau GSM (acronyme anglophone pour « Global System for Mobile Communications ») ou un réseau UMTS (acronyme anglophone pour « Universal Mobile Telecommunications System »), LTE (pour « Long Term Evolution », en anglais), de cinquième génération 5G, ou conforme à une génération ultérieure de la norme 3GPP (« 3rd Generation Partnership Project », en anglais). Par ailleurs l'identifiant d'abonné unique IMSI est associé à un identifiant qui correspond au numéro de téléphone permettant d'appeler l'utilisateur du premier terminal (TC1) et donc d'établir une communication avec cet utilisateur. Dans la suite de la description, l'identifiant du premier terminal (TC1) est noté IAP1.

Alternativement, le premier terminal (TC1) est un téléphone fixe rattaché à un autocommutateur téléphonique privé PABX (acronyme anglophone pour « Private Automatic Branch eXchange »). Le premier réseau est par exemple un réseau de communication interne, par exemple le réseau interne d'une société ou d'une entreprise. Le premier terminal (TC1) peut encore être rattaché à un réseau ADSL (acronyme anglophone pour « Asymmetric Digital Subscriber Line ») ou FTTH (acronyme anglophone pour « Fiber To The Home »). Dans de tels modes de réalisation également, le premier terminal (TC1) dispose bien entendu d'un identifiant IAP1.

Le premier terminal (TC1) comprend un module de communication (COM1). Le module de communication (COM1) est agencé pour communiquer avec le deuxième terminal de communication (TC2), appelé aussi ci-après deuxième terminal (TC2), par l'intermédiaire de la plateforme de gestion de communication (PGC), dont une description plus détaillée sera fournie dans la suite de la description. Plus particulièrement, le module de communication (COM1) est agencé pour recevoir une première requête de communication téléphonique (REQ1), ci-après première requête (REQ1), issue de la plateforme de gestion de communication (PGC) en vue d'établir une communication téléphonique avec le deuxième terminal de communication (TC2).

Par « première requête », on entend une commande de premier appel. La première requête (REQ1) est reçue en provenance de la plateforme de gestion de communication (PGC) via un premier canal de communication (RES11). Par « recevoir une première requête de communication téléphonique », on entend que le module de communication (COM1) reçoit un appel téléphonique.

Typiquement, la plateforme de gestion de communication (PGC) peut émettre une commande d'ouverture d'une session d'appel à destination du premier terminal (TC1) via le premier canal de communication (RES11) reliant le premier terminal (TC1) au réseau téléphonique. Cette commande comprend un identifiant d'appelé correspondant à l'identifiant du premier terminal (TC1) et un identifiant d'appelant associé à la plateforme de gestion de communication. Pour ce faire, la plateforme de gestion de communication (PGC) émet un message SIP de type INVITE à destination du réseau de téléphonie, puis se met en attente de détection d'un décroché humain. A réception de ce message SIP INVITE, le réseau de téléphonie traduit cette commande en émettant un message demande de création d'une session d'appel vers le premier terminal (TC1) via le premier canal de communication (RES11). Il s'agit d'un message de type CS ou PSTN.

On notera que de manière générale, une commande comprend un identifiant d'appelant et un identifiant d'appelé, l'identifiant d'appelant étant destiné à identifier le terminal duquel provient l'appel et l'identifiant d'appelé étant destiné à identifier le terminal recevant l'appel.

Dans l'exemple illustré en Figure 1, on comprend que, dans le cas où le premier terminal (TC1) est un téléphone mobile, le module de communication (COM1) est agencé pour communiquer avec la plateforme de gestion de communication (PGC) à l'aide d'un réseau de communication sans-fil.

On se place à présent dans un cas où le premier terminal (TC1) a reçu, à un instant courant, une première requête (REQ1), ou comme défini ci-avant une commande de premier appel, en vue d'établir une communication téléphonique avec le deuxième terminal de communication (TC2).

Le premier terminal (TC1) peut être configuré pour alerter l'utilisateur suite à la réception de la première requête (REQ1). Par exemple, un signal peut être émis à destination de l'utilisateur pour signaler un appel téléphonique entrant. Il peut s'agir d'un signal visuel tel qu'un affichage sur un écran ou l'illumination d'une LED. Il peut également s'agir d'un signal sonore tel qu'une sonnerie. Il peut également s'agir d'un signal haptique tel qu'une vibration. L'utilisateur peut alors choisir d'accepter l'appel, de refuser l'appel, ou d'ignorer l'appel.

Différents messages de signalisation peuvent être générés par le premier terminal (TC1) à destination de la plateforme de gestion de communication en réponse à la première requête (REQ1).

Par exemple, suite à une acceptation de l'appel entrant, ou « décroché », par l'utilisateur du premier terminal (TC1), le réseau de téléphonie reçoit une réponse d'acceptation de l'appel, qui comprend des informations de description de la session voix ou VSD (pour « Voice Session Description », en anglais). A réception de ce message, le réseau de téléphonie émet un premier signal de réponse (REP11) via le premier canal de communication (RES11) à destination de la plateforme de gestion (PGC) pour l'informer de l'acceptation de l'appel par l'utilisateur du premier terminal (TC1). Ce premier signal de réponse peut par exemple prendre la forme d'un message SIP de type OK.

En réalité, un tel message de signalisation ne permet pas de distinguer un décroché par l'utilisateur lui-même d'un décroché par sa messagerie vocale.

Un décroché par une messagerie vocale peut, par exemple, être automatiquement déclenché en cas de refus d'appel par l'utilisateur ou en cas de d'expiration d'un délai prédéterminé sans acceptation ni refus d'appel par l'utilisateur.

Pour effectuer cette distinction entre décroché humain et décroché par une messagerie vocale, il est nécessaire que la plateforme de gestion de communication (PGC) obtienne des informations complémentaires.

Dans l'exemple de la figure 1, le premier terminal (TC1) embarque également une interface homme-machine (IHM1) raccordée à un circuit de traitement comprenant un processeur (CPU1) et une mémoire (MEM1), lui-même raccordé au module de communication (COM1).

L'interface homme-machine (IHM1) est agencée pour permettre une interaction avec un utilisateur lorsqu'un appel téléphonique entrant est reçu au niveau du premier terminal (TC1). L'utilisateur peut alors interagir avec l'interface homme-machine (IHM1) afin d'accepter ou de refuser cet appel téléphonique entrant. Structurellement, l'interface homme-machine (IHM1) peut désigner par exemple un bouton virtuel d'un écran tactile, ou un bouton physique d'un clavier avec lequel l'utilisateur interagit tactilement, ou encore un module de reconnaissance vocale avec lequel l'utilisateur interagit vocalement.

Dans un ou plusieurs modes de réalisation, l'interaction de l'utilisateur avec l'interface Homme-Machine (IHM1) est réalisée via une application de type composeur téléphonique ou numéroteur téléphonique (aussi appelé « dialer » ou « dialler » en anglais). Ainsi, lorsque l'utilisateur interagit avec l'interface homme-machine (IHM1) au niveau du premier terminal (TC1) pour accepter un appel entrant, le composeur téléphonique du premier terminal (TC1) peut émettre une indication de cette interaction d'acceptation d'appel sous la forme d'un appel API.

La mémoire (MEM1) est agencée pour stocker des instructions d'un programme informatique dont l'exécution par le processeur (CPU1) se traduit par le fonctionnement du premier terminal (TC1). Par exemple, dans un ou plusieurs modes de réalisation, le processeur (CPU1) est agencé pour générer des données représentatives d'une interaction de l'utilisateur du premier terminal (TC1) avec l'interface Homme-Machine (IHM1).

Dans le cas où l'interaction de l'utilisateur du premier terminal (TC1) avec l'interface Homme-Machine (IHM1) correspond à une autorisation d'établissement de la communication téléphonique, des données représentatives de cette autorisation sont générées. Par exemple, suite à une acceptation de l'appel entrant, ou « décroché », par l'utilisateur du premier terminal (TC1), le premier terminal (TC1) peut être configuré pour émettre, outre le premier signal de réponse (REP11), un deuxième signal de réponse (REP12) via un deuxième canal de communication (RES12) distinct du premier canal de communication (RES11). Le deuxième signal de réponse est un message de signalisation comprenant des informations représentatives d'une interaction de l'utilisateur avec l'interface homme-machine (IHM1) du premier terminal (TC1). Par exemple, un tel message de signalisation peut être une requête http post de type « appel décroché (pour « call picked-up » en anglais), émise par une application logicielle du premier terminal (TC1).

De même, dans le cas où l'interaction de l'utilisateur du premier terminal (TC1) avec l'interface Homme-Machine (IHM1) correspond à un refus d'établissement de la communication téléphonique, des données représentatives de ce refus peuvent être générées.

Le module de communication (COM1) est en outre configuré pour transmettre les données représentatives de cette autorisation ou de ce refus d'établissement de la communication téléphonique à destination de la plateforme de gestion de communication (PGC).

Par exemple, le processeur (CPU1) peut être agencé pour commander la génération du deuxième signal de réponse (REP12), distinct du premier signal de réponse (REP11), lorsque l'utilisateur interagit avec l'interface homme-machine (IHM1) pour refuser un appel entrant.

Le deuxième terminal de communication (TC2) comprend au moins un module de communication (COM2), et peut comprendre d'autres éléments, tels que ceux précédemment décrits pour le premier terminal de communication (TC1). Pour ce faire, le deuxième terminal (TC2) dispose d'un identifiant IA2. Le module de communication (COM2) est agencé pour communiquer avec le premier terminal (TC1) par l'intermédiaire de la plateforme de gestion de communication (PGC). Plus particulièrement, le module de communication (COM2) est agencé pour recevoir une deuxième requête de communication téléphonique (REQ2), ci-après deuxième requête (REQ2), issue de la plateforme de gestion de communication (PGC) en vue d'établir une communication téléphonique avec le premier terminal de communication (TC1). Par « deuxième requête », on entend une commande de deuxième appel. La deuxième requête (REQ2) est reçue en provenance de la plateforme de gestion de communication (PGC) via un canal de communication (RES2) dans un réseau téléphonique. Par « recevoir une deuxième requête de communication téléphonique », on entend que le module de communication (COM2) reçoit un appel téléphonique.

Dans le contexte de l'invention, un poste de travail (PT) désigne toute forme de terminal informatique représentant un point d'accès aux fonctionnalités d'une application informatique. Un poste de travail (PT) est équipé, notamment, d'une interface homme-machine (IHM0). L'application informatique est configurée pour permettre à un utilisateur de déclencher un appel téléphonique entre le premier terminal de communication (TC1) et le deuxième terminal de communication (TC2). Le déclenchement de l'appel téléphonique s'effectue à l'initiative de l'utilisateur, par exemple à l'aide d'une fonctionnalité de type « click-to-call » consistant à commander l'émission d'une requête d'établissement d'une session de communication téléphonique, la requête comprenant une indication d'un numéro ou identifiant d'appelant et une indication d'un numéro ou identifiant d'appelé. Le numéro ou identifiant d'appelant correspond à un identifiant du premier terminal (TC1). Le numéro ou identifiant d'appelé correspond à un identifiant du deuxième terminal (TC2).

On suppose que plusieurs utilisateurs d'un même groupe d'utilisateurs sont chacun équipés d'un premier terminal de communication (TC1) et d'un poste de travail (PT). Le premier terminal de communication et le poste de travail peuvent être confondus. Autrement dit, le premier terminal peut comprendre une application informatique permettant la mise en œuvre du « click-to-call ». On suppose également que ce groupe d'utilisateurs a souscrit à un service de gestion d'alias qui leur permet de disposer d'un numéro ou identifiant partagé. Ce numéro ou identifiant partagé peut être utilisé en tant qu'identifiant d'appelant par un utilisateur du groupe pour établir une communication téléphonique entre son premier terminal (TC1) et un deuxième terminal (TC2) utilisé par son interlocuteur.

Dans la suite, on considère une plateforme (PGC) de gestion de communication pour la mise en œuvre d'une gestion d'une communication entre le premier terminal (TC1) et le deuxième terminal (TC2).

La plateforme de gestion de communication supporte le service de gestion d'alias précité. Pour ce faire, la plateforme de gestion de communication (PGC) est connectée à un ou plusieurs réseaux de communication de manière à pouvoir communiquer, via un ou plusieurs canaux de communication (RES0), avec le ou les postes de travail (PT).

Cette plateforme est en outre connectée à un réseau de téléphonie de manière à pouvoir communiquer, via un ou plusieurs canaux de communication (RES11, RES12, RES2), avec les terminaux de communication (TC1, TC2). A ce titre, elle dispose d'un identifiant distinct ou numéro de service IPPF et réalise l'interface entre les utilisateurs du service de gestion d'alias et le réseau de téléphonie. Une telle plateforme, typiquement gérée par l'opérateur du réseau téléphonique, est agencée pour gérer les requêtes d'établissement d'appel, ou commande de premier appel et commande de deuxième appel, émises à destination du premier terminal (TC1) et du deuxième terminal (TC2).

On présente maintenant, en relation avec la figure 2, le procédé de gestion d'une communication téléphonique entre un premier terminal TC1 et un deuxième terminal TC2 selon un mode de réalisation. Ce procédé de gestion est mis à œuvre par un dispositif de gestion, ce dispositif de gestion pouvant être intégré, selon des modes de réalisation, dans la plateforme de gestion PGC de communication.

La plateforme de gestion de communication (PGC) reçoit, comme illustré au bloc 10 de la figure 2, une requête (REQ0) d'établissement d'une session de communication téléphonique entre le premier terminal (TC1) et le deuxième terminal (TC2). La requête (REQ0) est reçue via un canal de communication (REQ0) avec le poste de travail (PT). La requête comprend un numéro ou identifiant d'appelant qui correspond à l'identifiant IAP1 du premier terminal et un numéro ou identifiant d'appelé qui correspond à l'identifiant IA2 du deuxième terminal.

La plateforme de gestion de communication (PGC) initie alors, comme illustré au bloc 11 de la figure 2, une communication avec le premier terminal (TC1). Cette communication est initiée par l'émission et la transmission d'une première requête de communication téléphonique (REQ1) - ou première requête, ou encore commande de premier appel - via un canal de communication vocale (RES11). La première requête comprend comme numéro ou identifiant d'appelant l'identifiant associé au numéro de service de la plateforme et comme numéro ou identifiant d'appelé l'identifiant IAP1 associé au premier terminal (TC1).

La plateforme de gestion de communication (PGC) se met alors, comme illustré au bloc 12 de la figure 2, en attente d'une détection d'un décroché humain. En d'autres termes, la plateforme de gestion de communication est configurée pour recevoir, en réponse à l'émission de la première requête de communication téléphonique (REQ1), des messages de signalisation en provenance du premier terminal (TC1), que ces messages soient transmis via un canal de communication vocale (RES11) ou via un canal de communication de données (RES12).

En cas de détection d'un décroché humain pour l'appel en cours, elle considère la communication avec un humain au niveau du premier terminal (TC1) établie et initie, comme illustré au bloc 13 de la figure 2, une communication avec le deuxième terminal (TC2). Cette communication est initiée par l'émission et la transmission d'une deuxième requête de communication téléphonique (REQ2) - ou deuxième requête, ou encore commande de deuxième appel - via un canal de communication vocale (RES2). La deuxième requête comprend comme numéro ou identifiant d'appelant l'identifiant associé au numéro de service de la plateforme et comme numéro ou identifiant d'appelé l'identifiant IA2 associé au deuxième terminal (TC2). Ainsi, dans ce mode de réalisation, la commande de deuxième appel, ou deuxième requête comprend un identifiant d'appelant différent de l'identifiant du premier terminal.

Au contraire, si la plateforme de gestion de communication (PGC) ne détecte pas de décroché humain, ou détecte une absence de décroché humain, alors elle considère qu'aucune communication avec un humain n'est établie au niveau du premier terminal (TC1) et commande, comme illustré au bloc 14 de la figure 2, la fermeture de la branche de communication vers le premier terminal (TC1), c'est-à-dire le raccroché du premier terminal appelant.

On distingue un décroché humain d'un décroché par messagerie. Plus précisément, on entend par décroché humain l'acceptation de l'appel suite à l'interaction de l'utilisateur du terminal appelé, par opposition à un décroché automatique par une messagerie vocale.

On comprend que l'absence de décroché humain au niveau du premier terminal (TC1) désigne les différents cas suivants :
- Acceptation de l'appel par la messagerie vocale associée à l'identifiant IAP1 du premier terminal (TC1) ;
- Absence de réponse reçue à expiration d'un délai prédéterminé, par exemple due au fait que le premier terminal (TC1) est hors couverture ; ou
- Refus de l'appel par l'utilisateur du premier terminal (TC1).

Lorsque la plateforme de gestion de communication obtient via le canal de communication vocale (RES11) un premier signal de réponse (REP11) indiquant une acceptation de l'appel au niveau du premier terminal (TC1), deux cas sont possibles :
- soit l'appel a été accepté par un utilisateur humain,
- soit l'appel a été accepté par la messagerie vocale.

A l'inverse, tant qu'aucun premier signal de réponse n'est obtenu, la plateforme peut conclure que l'appel n'a pas encore été accepté. La plateforme peut être configurée pour commander la clôture de la première branche de communication vers le premier terminal (TC1) en l'absence d'obtention d'un premier signal de réponse à expiration d'un délai prédéterminé.

La plateforme de gestion de communication peut obtenir en outre, via le canal de communication de données (RES12), un deuxième signal de réponse (REP12) indiquant une interaction avec l'interface homme-machine (IHM1) du premier terminal (TC1).

Dans le cas où un tel deuxième signal de réponse (REP12) est obtenu et indique un décroché par un utilisateur, la plateforme peut conclure que l'appel a été accepté par un utilisateur humain, maintenir la première branche de communication vers le premier terminal (TC1), et ouvrir une deuxième branche de communication vers le deuxième terminal (TC2).

Dans le cas où un tel deuxième signal de réponse (REP12) est obtenu et indique, en revanche, un refus de l'appel par un utilisateur, la plateforme peut conclure que l'appel n'a pas été accepté et commander la clôture de la première branche de communication vers le premier terminal (TC1).

Enfin, dans le cas où un premier signal de réponse (REP11) est obtenu mais qu'aucun deuxième signal de réponse (REP12) n'est obtenu, la plateforme peut conclure que l'appel a été accepté non pas par un utilisateur humain mais par une messagerie, et commander également la clôture de la première branche de communication vers le premier terminal (TC1).

Ainsi, la plateforme de gestion de communication crée d'abord une branche de communication avec un utilisateur humain au niveau du premier terminal (TC1) puis, seulement en cas de détection du décroché humain, crée ensuite une autre branche de communication à destination du deuxième terminal (TC2), en vue d'établir une session de communication entre, d'une part, l'utilisateur humain au niveau du premier terminal (TC1) et, d'autre part, le deuxième terminal (TC2).

Le fait de ne décider d'une détection positive de décroché qu'en cas de décroché humain permet de considérer le décrocher par messagerie comme une absence de décroché et donc de mettre fin à la session de communication en cours. Ainsi aucun appel n'est émis à destination du deuxième terminal, ce qui empêche que l'utilisateur du deuxième terminal soit mis en communication avec une messagerie vocale.

Dans certains modes de réalisation, après avoir transmis la deuxième requête de communication téléphonique (REQ2) ou commande de deuxième appel, la plateforme de gestion de communication (PGC) se met, comme illustré au bloc 15 de la figure 2, en attente d'une détection d'un décroché. En d'autres termes, la plateforme de gestion de communication est configurée pour recevoir, en réponse à l'émission de la deuxième requête de communication téléphonique (REQ2), au moins un message de signalisation en provenance du deuxième terminal (TC2) via un canal de communication (RES2).

Lorsque le décroché est détecté au niveau du deuxième terminal (TC2), la plateforme de gestion de communication (PGC) établit la session de communication, comme illustré au bloc 16 de la figure 2, en joignant les branches de communication téléphonique respectivement établies avec le premier terminal (TC1) et avec le deuxième terminal (TC2).

Ainsi, la plateforme de gestion de communication (PGC) peut gérer l'établissement de la session de communication de bout en bout, en se basant sur la détection successive d'un décroché humain 12 au niveau du premier terminal (TC1) puis d'un décroché 15 au niveau du deuxième terminal (TC2).

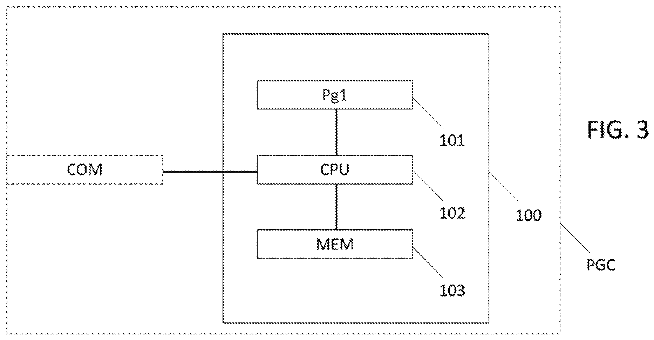

On présente maintenant, en relation avec la figure 3, la structure matérielle d'un dispositif 100 de gestion d'une communication téléphonique.

Le dispositif de gestion 100 comprend un module de réception de requêtes d'établissement de sessions de communication téléphonique, un module d'émission de commandes d'appel, un module de détection automatique de décrochés, une horloge, et un module de jonction d'appels.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif de gestion 100 comprend une mémoire vive 103 (par exemple une mémoire RAM), une unité de traitement 102 équipée par exemple d'un processeur CPU, et pilotée par un programme d'ordinateur Pg1, représentatif des modules précités, stocké dans une mémoire morte 101 (par exemple une mémoire ROM ou un disque dur). A l'initialisation, les instructions de code du programme d'ordinateur sont par exemple chargées dans la mémoire vive 103 avant d'être exécutées par le processeur de l'unité de traitement 102. La mémoire vive 103 contient notamment les valeurs des identifiants du premier terminal et du deuxième terminal. Elle stocke le cas échéant les indications de décroché par un humain, la ou les conditions d'émission de commandes d'appels et la ou les conditions de clôture d'appels.

Le processeur de l'unité de traitement 102 pilote, conformément au logigramme de la figure 2, la réception 10 de la requête d'établissement d'une session de communication téléphonique, l'émission 11 de la commande de premier appel vers le premier terminal, la détection de décroché humain 12 au niveau du premier terminal et l'émission 13 de la commande de deuxième appel vers le deuxième terminal. Le processeur de l'unité de traitement 102 peut également piloter, conformément au logigramme de la figure 2, l'émission 14 de la commande de fin de premier appel, la détection de décroché 15 au niveau du deuxième terminal ou l'émission 16 de la commande d'établissement d'une session de communication.

La figure 3 illustre seulement une manière particulière, parmi plusieurs possibles, de réaliser le dispositif de gestion 100, afin qu'il effectue les étapes du procédé de gestion d'une communication tel que détaillé ci-dessus, en relation avec la figure 2 dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 100 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif de gestion 100 intégré à une plateforme de gestion (PGC) d'un réseau de communication, équipée d'une interface de communication COM mais il peut plus généralement être embarqué dans n'importe quel équipement serveur de ce réseau. Alternativement, le programme d'ordinateur permettant l'exécution du procédé de gestion peut être installé sur un serveur distant et être rendu accessible au dispositif de gestion sous la forme d'un logiciel en tant que service.

En outre, les fonctions réalisées par la plateforme de gestion (PGC) qui vient d'être décrite peuvent être réparties sur plusieurs équipements, comprenant par exemple un premier équipement réalisant l'interface avec un groupe de terminaux comprenant le premier terminal (TC1) et un deuxième équipement réalisant l'interface avec le réseau de téléphonie rattaché au deuxième terminal (TC2), le premier équipement et le deuxième équipement étant agencés pour communiquer entre eux via une interface dédiée.

L'invention qui vient d'être décrite dans ses différents modes de réalisation présente de nombreux avantages. En particulier, elle permet d'améliorer l'efficacité de la mise en relation d'un utilisateur humain au niveau d'un premier terminal appelant avec un deuxième terminal appelé, tout en préservant la confidentialité du numéro de téléphone primaire du premier terminal.

## Revendications

1. Procédé de gestion d'une communication téléphonique entre un premier terminal et un deuxième terminal dans un réseau de communication, chaque terminal étant associé respectivement à au moins un identifiant dans ledit réseau, ledit procédé étant mis en œuvre par au moins un dispositif de gestion configuré pour mettre en œuvre le procédé de gestion de communication téléphonique, ledit procédé comprenant :
- une réception (10) d'une requête d'établissement d'une session de communication téléphonique, la requête comprenant un identifiant d'appelé correspondant à un identifiant du deuxième terminal ;
- une émission (11) d'une commande de premier appel vers le premier terminal; et
- sur détection (12) d'un décroché du premier terminal par un utilisateur, ladite détection étant basée au moins sur une obtention d'un signal indiquant que la commande de premier appel a été acceptée, associée à une obtention d'une indication d'une interaction d'un utilisateur avec une interface homme-machine au niveau du premier terminal, une émission (13) d'une commande de deuxième appel vers le deuxième terminal.

2. Procédé selon la revendication 1, dans lequel l'interaction de l'utilisateur avec l'interface homme-machine au niveau du premier terminal est du type d'une interaction d'acceptation d'appel et l'indication de l'interaction d'acceptation d'appel est un appel API issu d'un composeur téléphonique du premier terminal.

3. Procédé selon la revendication 1 ou 2, dans lequel l'indication de l'interaction est reçue via un canal de communication de données.

4. Procédé selon l'une des revendications 1 à 3, dans lequel le signal indiquant que la commande de premier appel a été acceptée est vocal et reçu via un canal de communication vocale.

5. Procédé selon l'une des revendications 1 à 4, dans lequel la requête d'établissement d'une session de communication téléphonique comprend un identifiant d'appelant correspondant à un identifiant du premier terminal et la commande de premier appel comprend un identifiant d'appelé correspondant audit identifiant du premier terminal.

6. Procédé selon l'une des revendications 1 à 5, dans lequel la requête d'établissement d'une session de communication téléphonique est issue d'une interaction avec une interface homme-machine d'un appareil connecté à un portail applicatif.

7. Procédé selon l'une des revendications 1 à 6, comprenant, en outre, après l'émission (13) de la commande de deuxième appel vers le deuxième terminal :
- une émission (16) d'une commande d'établissement d'une session de communication entre le premier terminal et le deuxième terminal sur détection d'un décroché (15) du deuxième terminal.

8. Procédé selon l'une des revendications 1 à 7, comprenant, en outre, une émission (14) d'une commande de fin de premier appel vers le premier terminal sur détection, avant l'expiration d'un délai prédéterminé, d'un rejet du deuxième appel en provenance du premier terminal.

9. Procédé selon l'une des revendications 1 à 8, comprenant, en outre, une émission (14) d'une commande de fin de premier appel vers le premier terminal à expiration d'un délai prédéterminé en l'absence de détection d'un décrocher du premier terminal et en l'absence de détection d'un rejet du premier appel en provenance du premier terminal.

10. Programme informatique comportant des instructions pour la mise en œuvre du procédé selon l'une des revendications 1 à 9 lorsque ce programme est exécuté par un processeur.

11. Dispositif de gestion d'une communication téléphonique entre un premier terminal et un deuxième terminal dans un réseau de communication, chaque terminal étant associé respectivement à au moins un identifiant dans ledit réseau, le dispositif étant configuré pour :
- recevoir (10) une requête d'établissement d'une session de communication téléphonique, la requête comprenant un identifiant d'appelé correspondant à un identifiant du deuxième terminal ;
- émettre (11) une commande de premier appel vers le premier terminal; et
- émettre (13) une commande de deuxième appel vers le deuxième terminal, sur détection (12) d'un décroché du premier terminal par un utilisateur, ladite détection étant basée au moins sur une obtention d'un signal indiquant que la commande de premier appel a été acceptée, associée à une obtention d'une indication d'une interaction d'un utilisateur avec une interface homme-machine au niveau du premier terminal.

12. Plateforme de gestion de communication, apte à être connectée à un réseau de communication téléphonique, configurée pour déclencher une communication téléphonique entre un premier terminal et un deuxième terminal dans ledit réseau de communication, chaque terminal étant associé à au moins un identifiant dans ledit réseau, ladite plateforme comprenant un dispositif de gestion d'une communication téléphonique selon la revendication 11.

13. Support d'enregistrement non transitoire lisible par un ordinateur sur lequel est enregistré un programme pour la mise en œuvre du procédé selon l'une des revendications 1 à 9 lorsque ce programme est exécuté par un processeur.

## Patentansprüche

1. Verfahren zum Management einer Telefonkommunikation zwischen einem ersten Endgerät und einem zweiten Endgerät in einem Kommunikationsnetz, wobei jedem Endgerät jeweils mindestens eine Kennung in dem Netz zugeordnet ist, wobei das Verfahren von mindestens einer Managementvorrichtung durchgeführt wird, die dafür ausgelegt ist, das Verfahren zum Management einer Telefonkommunikation durchzuführen, wobei das Verfahren umfasst:
- einen Empfang (10) einer Anforderung zum Aufbau einer Telefonkommunikationssitzung, wobei die Anforderung eine Angerufenen-Kennung umfasst, die einer Kennung des zweiten Endgeräts entspricht;
- ein Senden (11) eines Befehls des ersten Anrufs an das erste Endgerät; und
- bei Erkennung (12) eines Abhebens des Hörers des ersten Endgeräts durch einen Benutzer, wobei die Erkennung wenigstens auf einem Erhalt eines Signals basiert, das anzeigt, dass der Befehl des ersten Anrufs angenommen worden ist, verbunden mit einem Erhalt einer Anzeige einer Interaktion eines Benutzers mit einer Mensch-Maschine-Schnittstelle am ersten Endgerät, ein Senden (13) eines Befehls des zweiten Anrufs an das zweite Endgerät.

2. Verfahren nach Anspruch 1, wobei die Interaktion des Benutzers mit der Mensch-Maschine-Schnittstelle am ersten Endgerät vom Typ einer Anrufannahme-Interaktion ist und die Anzeige der Anrufannahme-Interaktion ein API-Anruf ist, der von einem Telefonwählgerät des ersten Endgeräts stammt.

3. Verfahren nach Anspruch 1 oder 2, wobei die Anzeige der Interaktion über einen Datenkommunikationskanal empfangen wird.

4. Verfahren nach einem der Ansprüche 1 bis 3, wobei das Signal, das anzeigt, dass der Befehl des ersten Anrufs angenommen worden ist, ein Sprachsignal ist und über einen Sprachkommunikationskanal empfangen wird.

5. Verfahren nach einem der Ansprüche 1 bis 4, wobei die Anforderung zum Aufbau einer Telefonkommunikationssitzung eine Anruferkennung umfasst, die einer Kennung des ersten Endgeräts entspricht, und der Befehl des ersten Anrufs eine Angerufenen-Kennung umfasst, die dieser Kennung des ersten Endgeräts entspricht.

6. Verfahren nach einem der Ansprüche 1 bis 5, wobei die Anforderung zum Aufbau einer Telefonkommunikationssitzung von einer Interaktion mit einer Mensch-Maschine-Schnittstelle eines Geräts stammt, das mit einem Antragsportal verbunden ist.

7. Verfahren nach einem der Ansprüche 1 bis 6, welches außerdem, nach dem Senden (13) des Befehls des zweiten Anrufs an das zweite Endgerät, umfasst:
- ein Senden (16) eines Befehls zum Aufbau einer Telefonkommunikationssitzung zwischen dem ersten Endgerät und dem zweiten Endgerät bei Erkennung eines Abhebens des Hörers (15) des zweiten Endgeräts.

8. Verfahren nach einem der Ansprüche 1 bis 7, welches außerdem ein Senden (14) eines Befehls zum Beenden des ersten Anrufs an das erste Endgerät bei Erkennung, vor dem Ablauf einer vorbestimmten Zeitdauer, einer Zurückweisung des zweiten Anrufs vom ersten Endgerät umfasst.

9. Verfahren nach einem der Ansprüche 1 bis 8, welches außerdem ein Senden (14) eines Befehls zum Beenden des ersten Anrufs an das erste Endgerät bei Ablauf einer vorbestimmten Zeitdauer bei Nichtvorhandensein einer Erkennung eines Abhebens des Hörers des ersten Endgeräts und bei Nichtvorhandensein einer Erkennung einer Zurückweisung des ersten Anrufs vom ersten Endgerät umfasst.

10. Computerprogramm, welches Anweisungen zur Durchführung des Verfahrens nach einem der Ansprüche 1 bis 9, wenn dieses Programm von einem Prozessor ausgeführt wird, umfasst.

11. Vorrichtung zum Management einer Telefonkommunikation zwischen einem ersten Endgerät und einem zweiten Endgerät in einem Kommunikationsnetz, wobei jedem Endgerät jeweils mindestens eine Kennung in dem Netz zugeordnet ist, wobei die Vorrichtung ausgelegt ist zum:
- Empfangen (10) einer Anforderung zum Aufbau einer Telefonkommunikationssitzung, wobei die Anforderung eine Angerufenen-Kennung umfasst, die einer Kennung des zweiten Endgeräts entspricht;
- Senden (11) eines Befehls des ersten Anrufs an das erste Endgerät; und
- Senden (13) eines Befehls des zweiten Anrufs an das zweite Endgerät bei Erkennung (12) eines Abhebens des Hörers des ersten Endgeräts durch einen Benutzer, wobei die Erkennung wenigstens auf einem Erhalt eines Signals basiert, das anzeigt, dass der Befehl des ersten Anrufs angenommen worden ist, verbunden mit einem Erhalt einer Anzeige einer Interaktion eines Benutzers mit einer Mensch-Maschine-Schnittstelle am ersten Endgerät.

12. Kommunikationsmanagement-Plattform, welche geeignet ist, mit einem Telefonkommunikationsnetz verbunden zu werden, und dafür ausgelegt ist, eine Telefonkommunikation zwischen einem ersten Endgerät und einem zweiten Endgerät in dem Kommunikationsnetz auszulösen, wobei jedem Endgerät mindestens eine Kennung in dem Netz zugeordnet ist, wobei die Plattform eine Vorrichtung zum Management einer Telefonkommunikation nach Anspruch 11 umfasst.

13. Computerlesbares nichtflüchtiges Aufzeichnungsmedium, auf dem ein Programm für die Durchführung des Verfahrens nach einem der Ansprüche 1 bis 9, wenn dieses Programm von einem Prozessor ausgeführt wird, aufgezeichnet ist.

## Claims

1. Method for managing a telephone communication between a first terminal and a second terminal in a communication network, each terminal being associated, respectively, with at least one identifier in said network, said method being implemented by at least one management device configured to implement the telephone communication management method, said method comprising:
- receiving (10) a request to establish a telephone communication session, the request comprising a called party identifier corresponding to an identifier of the second terminal;
- transmitting (11) a first call command to the first terminal; and
- upon detection (12) of the first terminal being picked up by a user, said detection being based at least on obtaining a signal indicating that the first call command has been accepted, associated with obtaining an indication of an interaction of a user with a human-machine interface on the first terminal, transmitting (13) a second call command to the second terminal.

2. Method according to Claim 1, wherein the interaction of the user with the human-machine interface on the first terminal is of the type of a call acceptance interaction, and the indication of the call acceptance interaction is an API call from a telephone dialler of the first terminal.

3. Method according to Claim 1 or 2, wherein the indication of the interaction is received via a data communication channel.

4. Method according to one of Claims 1 to 3, wherein the signal indicating that the first call command has been accepted is voice-based and received via a voice communication channel.

5. Method according to one of Claims 1 to 4, wherein the request to establish a telephone communication session comprises a caller identifier corresponding to an identifier of the first terminal, and the first call command comprises a called party identifier corresponding to said identifier of the first terminal.

6. Method according to one of Claims 1 to 5, wherein the request to establish a telephone communication session originates from an interaction with a human-machine interface of an appliance connected to an application portal.

7. Method according to one of Claims 1 to 6, furthermore comprising, after the transmission (13) of the second call command to the second terminal:
- transmitting (16) a command to establish a communication session between the first terminal and the second terminal upon detection of the second terminal being picked up (15).

8. Method according to one of Claims 1 to 7, furthermore comprising transmitting (14) a first call end command to the first terminal upon detection, before the expiration of a predetermined period, of rejection of the second call from the first terminal.

9. Method according to one of Claims 1 to 8, furthermore comprising transmitting (14) a first call end command to the first terminal upon expiration of a predetermined period in the absence of detection of the first terminal being picked up and in the absence of detection of rejection of the first call from the first terminal.

10. Computer program comprising instructions for implementing the method according to one of Claims 1 to 9 when this program is executed by a processor.

11. Device for managing a telephone communication between a first terminal and a second terminal in a communication network, each terminal being associated, respectively, with at least one identifier in said network, the device being configured to:
- receive (10) a request to establish a telephone communication session, the request comprising a called party identifier corresponding to an identifier of the second terminal;
- transmit (11) a first call command to the first terminal; and
- transmit (13) a second call command to the second terminal, upon detection (12) of the first terminal being picked up by a user, said detection being based at least on obtaining a signal indicating that the first call command has been accepted, associated with obtaining an indication of an interaction of a user with a human-machine interface on the first terminal.

12. Communication management platform, able to be connected to a telephone communication network, configured to trigger a telephone communication between a first terminal and a second terminal in said communication network, each terminal being associated with at least one identifier in said network, said platform comprising a device for managing a telephone communication according to Claim 11.

13. Non-transient computer-readable recording medium on which there is recorded a program for implementing the method according to one of Claims 1 to 9 when this program is executed by a processor.
